# EUROPEAN PATENT APPLICATION

(11) **EP 4 053 443 A1**
(43) Date of publication of application: **07.09.2022**
(21) Application number: 20882358.3
(22) Date of filing: 15.10.2020
(51) Int. Cl.: F16K 41/10, F25B 41/355

(54) **EXPANSION VALVE**

(30) Priority: 28.10.2019 JP 2019195453
(71) Applicant: Eagle Industry Co., Ltd., Minato-ku Tokyo 105-8587 (JP)
(72) Inventor: OGAWA, Noriyuki, Tokyo 105-8587 (JP)
(74) Representative: WSL Patentanwälte Partnerschaft mbB
(86) International application number: PCT/JP2020/038912
(87) International publication number: WO 2021/085159

(57) **Abstract**

Provided is an expansion valve capable of adjusting valve opening with high precision.

An expansion valve (1) includes: a main body portion (6) having a valve chamber (15) and a valve seat (12a); a valve body (9) configured for moving forward and backward relative to the valve seat; a case (3) fixed to the main body portion (6); an excitation portion (2); a rotor (13) that is driven to rotate by the excitation portion (2); and a forward and backward moving mechanism (C) that converts a rotational movement of the rotor into a linear movement to move the valve body (9) forward and backward. The valve chamber has a bellows (10) hosed therein. The bellows (10) is externally mounted on the valve body and configured for expanding and contracting in association with the forward and backward movement of the valve body is arranged, and a space (M2) between the bellows and the valve body is held in a vacuum state.

## Description

### {TECHNICAL FIELD}

The present invention relates to an expansion valve capable of controlling a flow rate.

### {BACKGROUND ART}

Conventionally, a cooling apparatus such as an air conditioner includes a refrigerating cycle consisting of a compressor, a condenser, an evaporator, and an expander, and depressurizes a refrigerant that is a liquefied sealed fluid output from the condenser so as to be easily evaporated by the expander provided between the condenser and the evaporator. An expansion valve capable of controlling a flow rate is used in the expander.

For example, an expansion valve of Patent Citation 1 includes a main body portion having a valve chamber and a valve seat, a valve body capable of moving forward and backward relative to the valve seat, a bottomed cylindrical case fixed to the main body portion, an excitation portion arranged on an outer side of the case, a rotor that is rotatably supported on an inner side of the case and is driven to rotate by the excitation portion, and a forward and backward moving mechanism that converts the rotational movement of the rotor into a linear movement to move the valve body forward and backward. The forward and backward moving mechanism includes a screw shaft capable of moving forward and backward in an axial direction while being rotated according to the rotation of the rotor, and a rod-shaped valve shaft having the valve body. The valve shaft is driven following to the forward and backward movement of the screw shaft, the valve body is brought into contact with or separated from the valve seat, and thereby capable of adjusting valve opening. Further, the forward and backward moving mechanism is arranged in a space sealed by the case and a bellows extending between the valve body and the main body portion, and therefore malfunction by intrusion of dust, moisture or the like from the outside of the machine or the inside of the machine is prevented.

### {CITATION LIST}

### {Patent Literature}

Patent Citation 1: JP 2006-226369 A (pages 3 - 5, FIG. 1)

### {SUMMARY OF INVENTION}

### {Technical Problem}

However, in the expansion valve of Patent Citation 1, since the bellows has a bellows shape and its surface area is large, if the bellows is heated by the high temperature refrigerant flowed into the valve chamber, contraction of the bellows is disturbed by thermal expansion of gas within the sealed space. Thus, the valve body fixed to the bellows may not move by the quantity consistent with the rotating quantity of the rotor, and valve opening may not be adjusted to the intended degree.

The present invention has been made focusing on such a problem, and an object of the present invention is to provide an expansion valve capable of adjusting valve opening with high precision.

### {Solution to Problem}

In order to solve the problem described above, an expansion valve according to the present invention includes: a main body portion having a valve chamber and a valve seat; a valve body configured for moving forward and backward relative to the valve seat; a case fixed to the main body portion; an excitation portion; a rotor that is driven to rotate by the excitation portion; and a forward and backward moving mechanism that converts a rotational movement of the rotor into a linear movement to move the valve body forward and backward, wherein the valve chamber has a bellows housed therein, the bellows being externally mounted on the valve body and configured for expanding and contracting in association with forward and backward movement of the valve body is arranged, and a space between the bellows and the valve body is held in a vacuum state. According to the aforesaid feature of the present invention, since the space between the bellows and the valve body is in a vacuum state, thermal expansion of gas is hardly generated between the bellows and the valve body even if the sealed fluid is at high temperature, the bellows is hardly affected by the sealed fluid, and therefore valve opening can be stably adjusted to the intended degree.

It may be preferable that the case is fixed in a sealed manner to the main body portion, the forward and backward moving mechanism has a speed reduction device that is arranged within the case and is configured for reducing a moving speed of the valve body with respect to a rotational speed of the rotor, and a space within the case is be in communication with the space between the bellows and the valve body. According to this preferable configuration, since the space within the case in which the speed reduction means is arranged is in a vacuum state, the speed reduction means is hardly affected by heat outside the case and therefore is usable over a wide temperature range.

It may be preferable that one end of the bellows is fixed in a sealed manner to the valve body, a stationary ring is fixed in a sealed manner to another end of the bellows, and the stationary ring is fitted with a sealing member in a sealed manner into an annular recess formed in the main body portion. According to this preferable configuration, the bellows, the valve body, and the stationary ring are formed in a unit, and the stationary ring is fitted in the annular recess of the main body portion while interposing the sealing member therebetween, thereby assembling is facilitated, and also the space between the bellows and the valve body is easily brought into a vacuum state.

It may be preferable that the stationary ring has an extended portion that is extended on a radially outer side of the bellows. According to this preferable configuration, since the pressure of the sealed fluid flowing into the valve chamber is relatively higher than the pressure of the space in a vacuum state between the bellows and the valve body, the pressure of the sealed fluid acting on the extended portion can restrict the stationary ring from moving toward the pulling out direction.

It may be preferable that the forward and backward moving mechanism includes a screw shaft having a male screw portion, and a valve shaft having a female screw portion configured for screwing with the male screw portion of the screw shaft and the valve body, and is provided with a space formed with the female screw portion into which the male screw portion is screwed. According to this preferable configuration, since the configuration of the forward and backward moving mechanism can be simplified and also the space between the bellows and the valve body is in a vacuum state, even if the volume of the space between the male screw portion and the female screw portion is changed because of relative forward and backward movement of the screw shaft and the valve shaft, gas migration or pressure change is hardly generated, and therefore the accuracy of adjustment of valve opening can be improved.

It is noted that a vacuum state in the present invention means "the state of the space filled with the gas at lower pressure than ordinary atmospheric pressure" defined by Japanese Industrial Standards JIS Z 8126.

### {BRIEF DESCRIPTION OF DRAWINGS}

FIG. 1 is a cross-sectional view showing an expansion valve according to a first embodiment of the present invention.
FIG. 2 is a plan view showing a speed reduction means in the first embodiment.
FIG. 3 is a cutaway perspective view showing a carrier and a planetary gear in the first embodiment.
FIG. 4 is an enlarged cross-sectional view showing a structure around a valve chamber in the first embodiment.
FIG. 5 is a view showing a bellows and a stationary ring in the first embodiment.
FIG. 6 is an enlarged cross-sectional view showing the movement of a screw shaft and a valve shaft in the first embodiment.
FIG. 7 is a cross-sectional view showing an expansion valve according to a second embodiment of the present invention.

### {DESCRIPTION OF EMBODIMENTS}

Modes for carrying out an expansion valve according to the present invention will be described below based on embodiments.

### {First Embodiment}

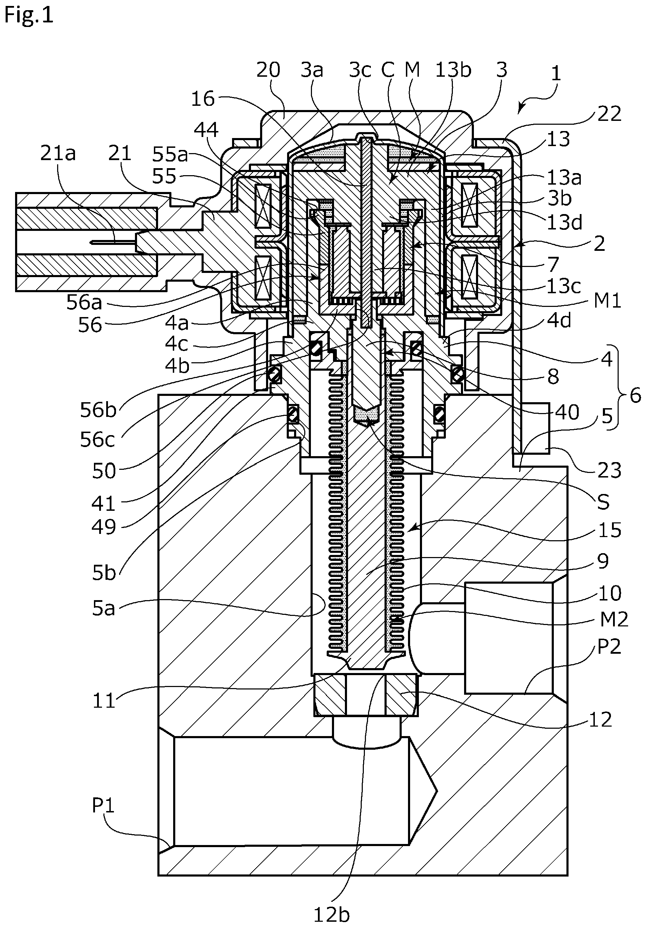

An expansion valve according to a first embodiment of the present invention will be described with reference to FIGS. 1 to 6.

An expansion valve 1 shown in FIG. 1 is adopted as an expansion valve constituting a refrigeration cycle in this embodiment, and controls a flow rate of a refrigerant as a sealed fluid by adjusting valve opening between a primary port P1 and a secondary port P2.

As shown in FIG. 1, the expansion valve 1 is mainly composed of an excitation mechanism 2 as an excitation portion, a case 3, a main body portion 6 having a valve chamber 15 and a valve seat 12b, a rotor 13, and a forward and backward moving mechanism C, and the forward and backward moving mechanism C is composed of a speed reduction means 7, a screw shaft 8, a valve shaft 9 as a valve body, and a bellows 10.

The excitation mechanism 2 is mainly composed of a stator 21 having coils and a resin mold 20 containing the stator 21. The stator 21 has a lead 21a, and is excited by the coils being energized through the lead 21a.

The mold 20 is formed of a synthetic resin into a bottomed tubular shape, with which the stator 21 is integrated by insert molding, and the case 3, a base body 4, the speed reduction means 7 and a rotor 13 are placed on an inner side of the mold 20.

Next, the case 3 will be described. The case 3 is formed of a non-magnetic metal into a bottomed tubular shape, and has a bottom portion 3a rounded outward (i.e., upward on the paper in FIG. 1) and an annular wall portion 3b extended along an axial direction from a radially outer end portion of the bottom portion 3a, and in the central portion of the bottom portion 3a, a recess 3c recessed outward is formed.

Next, the base body 4 and a housing 5 which are constituting the main body portion 6 will be described. The base body 4 has a cylindrical portion 4a that is opened on the side of the mold 20, a cylindrical portion 4b that is opened on the side of the housing 5, a receiving portion 4c formed between the cylindrical portion 4a on the side of the mold 20 and the cylindrical portion 4b on the side of the housing 5, and an annular ridge 4d formed on the outer peripheral surface of the cylindrical portion 4b, and the receiving portion 4c constitutes the respective bottoms of the cylindrical portions 4a and 4b.

In the cylindrical portion 4a on the side of the mold 20, a recessed groove 44 is formed over the circumferential direction on the inner peripheral surface thereof. The cylindrical portion 4b on the side of the housing 5 has a large diameter portion 41 protruding radially outward at the central portion in an extending direction thereof.

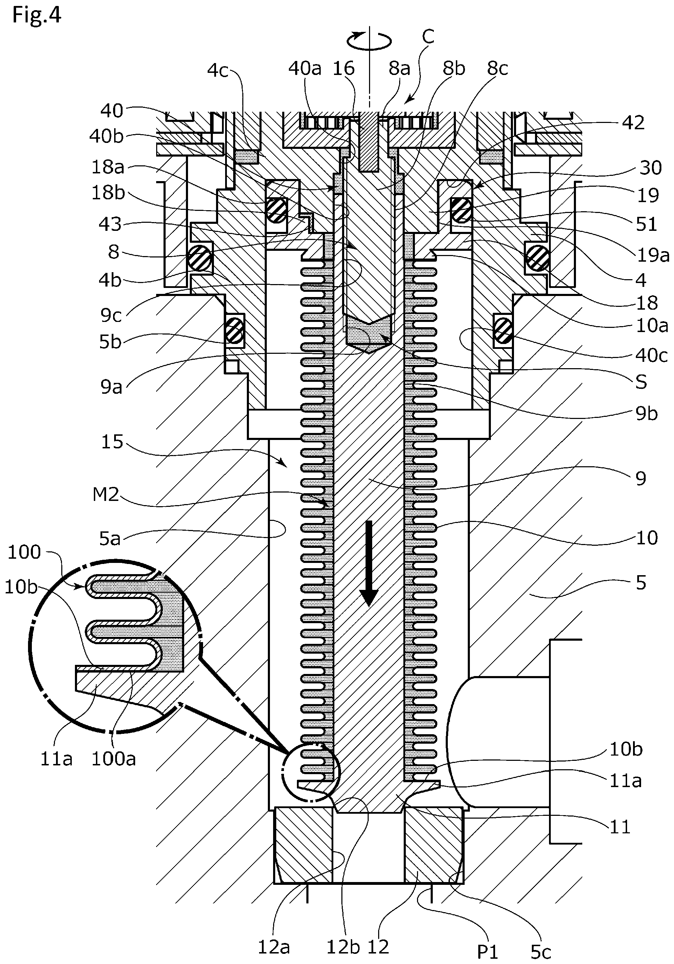

The receiving portion 4c has a tubular ridge 19 (see FIG. 4) protruding from the central portion thereof toward the inside of the valve chamber 15, and in the ridge 19, a hole portion 40 extending in the axial direction and a recess 43 (see FIG. 4) that is opened on the side of the housing 5 and radially outward are formed. The hole portion 40 has a screw shaft insertion portion 40a having an inner diameter slightly larger than the outer diameter of a body portion 8b of the screw shaft 8, and a valve shaft insertion portion 40b provided on the side of the housing 5 of the screw shaft insertion portion 40a and having an inner diameter slightly larger than the outer diameter of the valve shaft 9.

As to the base body 4, the case 3 is externally mounted on the cylindrical portion 4a on the side of the mold 20, an opening-side end face of the case 3 is welded in a state of being abutted against the ridge 4d, and thereby the base body 4 and the case 3 are connected in a sealed manner. Thereby, a case inside space M1 as a space inside the case is formed in a sealed manner. In addition, the base body 4 and the case 3 may be sealed by not only welding, but also interposing a sealing member therebetween or pressure bonding.

Further, in the base body 4, the large diameter portion 41 of the cylindrical portion 4b is inserted into an opening-side end portion of the mold 20, and the cylindrical portion 4b and the mold 20 are connected in a sealed manner by an O-ring 50 arranged in an annular groove formed on an outer periphery of the large diameter portion 41.

Next, the housing 5 will be described. The housing 5 has the primary port P1, the secondary port P2, and a hollow portion 5a formed to communicate with the primary port P1 and the secondary port P2 and to be opened to the outside, and the hollow portion 5a constitutes a stepped opening portion 5b formed to have a large inner diameter on the open side (the upper side on the paper), and is formed with a recessed stepped portion 5c (see FIG. 4) formed to have a small inner diameter on the side of the primary port P1.

A throttle member 12 is fixed in a sealed manner to the stepped portion 5c. The throttle member 12 has a cylindrical shape having a through hole 12a extending in the axial direction of the valve shaft 9, and an upper end of the through hole 12a of the throttle member 12 serves as the valve seat 12b. The inner diameter of the through hole 12a is formed to be smaller than the inner diameter of the primary port P1 of the housing 5.

The tip portion of the cylindrical portion 4b of the base body 4 is inserted into the opening portion 5b of the housing 5, the housing 5 and the cylindrical portion 4b are connected in a sealed manner by an O-ring 49 arranged in the annular groove formed on the outer periphery of the tip portion of the cylindrical portion 4b, thereby the main body portion 6 is constituted.

Further, in the main body portion 6, the valve chamber 15 is defined by the hollow portion 5a of the housing 5 and the cylindrical portion 4b and the receiving portion 4c of the base body 4 to communicate with the primary port P1 and the secondary port P2, and in the valve chamber 15, an outer peripheral surface 19a of the ridge 19 of the base body 4, an inner peripheral surface 40c of the cylindrical portion 4b on the side of the housing 5, and a bottom surface 42 of the receiving portion 4c constitute an annular recess 30 (see FIG. 4).

Further, in the housing 5, a retaining piece of a retainer 22 having a downward-facing L-shape is fitted onto a columnar protrusion protruding outward of the mold 20, and a hanging piece extended approximately orthogonal to the retaining piece of the retainer 22 is fastened and fixed to the housing 5 by a bolt 23 in a state that the retaining piece is abutted against an end face extended radially outward from an end portion of the protrusion. Thereby, the excitation mechanism 2, the case 3, and the base body 4 are prevented from falling out of the housing 5 and from relatively tilting with respect to the housing 5.

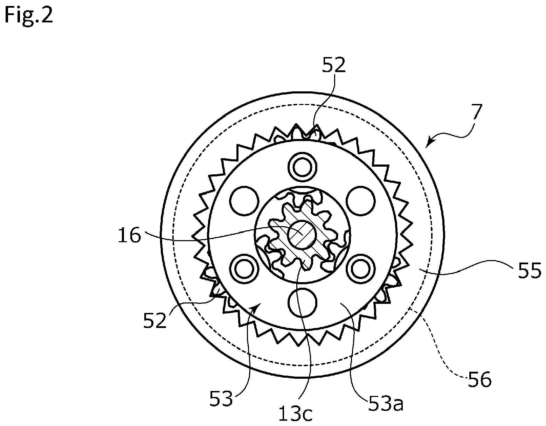

Next, the rotor 13 will be described. The rotor 13 is formed into a bottomed cylindrical shape that is opened on the side of the base body 4, and has a cylindrical annular wall portion 13a, a disk-shaped bottom portion 13b approximately orthogonal to the upper end on the paper of the annular wall portion 13a, a rotating shaft portion 13c extending coaxially with the annular wall portion 13a at the central portion of the bottom portion 13b, and a large diameter portion 13d formed on the base side of the rotating shaft portion 13c, and a gear portion constituting a sun gear is formed on an outer peripheral surface of the rotating shaft portion 13c (see FIG. 2).

In the rotor 13, in a state that a shaft 16 extends through and fixed to the rotating shaft portion 13c and one end portion of the shaft 16 is rotatably held in the recess 3c of the case 3, the annular wall portion 13a is arranged between the annular wall portion 3b of the case 3 and the cylindrical portion 4a on the side of mold 20 of the base body 4.

Further, the annular wall portion 13a of the rotor 13 serves as a permanent magnet, and the rotor 13 is rotated due to the excitation of the stator 21. More specifically, the rotor 13 and the stator 21 constitute a so-called stepper motor.

Next, the forward and backward moving mechanism C will be described. The speed reduction means 7 is composed of a sun gear of the rotor 13, a carrier 53, a planetary gear 52, a stationary ring gear 55, and a rotating ring gear 56, and a rotating speed of the rotating shaft portion 13c can be reduced to be transmitted to the screw shaft 8.

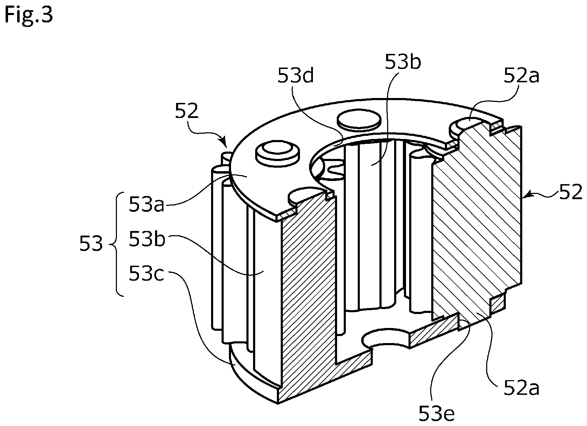

As shown in FIG. 3, the carrier 53 is formed in a unit including a lid disk 53a formed of metal into a disk shape, a disk-shaped support disk 53c facing in parallel to the lid disk 53a, and three columns 53b, each of which is fixed to the lid disk 53a and the support disk 53 at opposite ends, respectively, and is held in such a manner as to be interposed between an end face of the large diameter portion 13d of the rotor 13 and the receiving portion 4c of the base body 4 (see FIG. 1).

A hole portion 53d is formed in the central portion of the lid disk 53a, through which the rotating shaft portion 13c of the rotor 13 can be inserted. Further, in the circumferential direction of the lid disk 53a and the support disk 53c, the three columns 53b are equiangularly arranged in the circumferential direction of the lid disk 53a and the support disk 53c, and each of the planetary gears 52 is arranged between the columns 53b.

The planetary gears 52 are each a columnar body having a tooth profile on their outer peripheral surface, and each have columnar shaft portions 52a protruding from opposite ends thereof in the longitudinal direction, respectively, and the shaft portions 52a extend through respective pivotally supporting holes 53e formed in the lid disk 53a and the support disk 53c, so that the planetary gears 52 are rotatably supported between the lid disk 53a and the support disk 53c. The planetary gears 52 are meshed with the gear portion formed on the outer peripheral surface of the rotating shaft portion 13c of the rotor 13.

With reference to FIG. 2, the stationary ring gear 55 is integrally molded with resin into a cylindrical shape, has a gear portion that is formed on the inner peripheral surface thereof and meshed with the planetary gear 52, and a ridge 55a (see FIG. 1) protruding radially outward over the circumferential direction on the outer peripheral surface, is arranged on the radially outer side of the carrier 53 and the planetary gear 52 and on the side of the mold 20 (see FIG. 1), and is fixed by fixing means (not shown) so as not to rotate relative to the base body 4.

As shown in FIG. 1, the ridge 55a of the stationary ring gear 55 is inserted into a recessed groove 44 of the base body 4, so that the stationary ring gear 55 and the rotating ring gear 56 are held within the cylindrical portion 4a of the base body 4 on the side of the mold 20.

The rotating ring gear 56 is integrally molded with resin into a bottomed cylindrical shape, has an annular wall portion 56a arranged on the outer side of the carrier 53 and the planetary gear 52, and a disk-shaped bottom portion 56b orthogonal to the lower end portion on the paper of the annular wall portion 56a, and is arranged on the radially outer side of the carrier 53 and the planetary gear 52 and on the side of the screw shaft 8.

On the inner peripheral surface of the annular wall portion 56a, a gear portion that is meshed with the planetary gear 52 is formed.

A hole portion 56c is formed in the central portion of the bottom portion 56b, a head portion 8a of the screw shaft 8 is inserted into and fixed to the hole portion 56c, and the shaft 16 rotatably fixed to the head portion 8a of the screw shaft 8 extends through the hole portion 56c. Further, although not shown here, the bottom portion 56b has a shape to be engaged with the head portion 8a of the screw shaft 8 in a convex-concave manner, so that the rotation thereof relative to the screw shaft 8 is restricted. In addition, the rotating ring gear 56 and the screw shaft 8 may be integrally molded.

Next, the screw shaft 8 and the valve shaft 9 will be described based on FIG. 4. The screw shaft 8 includes a head portion 8a and the body portion 8b having a diameter larger than the head portion 8a, and a male screw portion 8c is formed to have a thread on an outer peripheral surface of the body portion 8b.

The screw shaft 8 extends through the screw shaft insertion portion 40a and the valve shaft insertion portion 40b of the base body 4, and is restricted from moving or tilting in a radial direction by the inner peripheral surface of the screw shaft insertion portion 40a, and therefore rotation is stabilized.

The valve shaft 9 is formed with a long shaft length relative to its outer diameter, includes a screw hole 9a formed at the upper end in the figure, a body portion 9b linear in the axial direction thereof, and a contact portion 11 integrally provided at the lower end in the figure, and a female screw portion 9c is formed to have a thread on an inner peripheral surface of the screw hole 9a. The valve shaft 9 extends through the valve shaft insertion portion 40b of the base body 4.

The contact portion 11 is provided with an annular flange portion 11a provided on the side of the screw shaft 8 and protruding radially outward from the body portion 9b, and has a shape that gradually tapers toward the tip from the flange portion 11a, and the minimum diameter of the outer diameter of the contact portion 11 of the valve shaft 9 is smaller than the inner diameter of the through hole 12a and the maximum diameter of the outer diameter of the contact portion 11 is larger than the inner diameter of the through hole 12a. Thus, when the contact portion 11 is seated on the valve seat 12b on the periphery of the through hole 12a, a part of the contact portion 11 can be inserted into the inside of the through hole 12a, and the cross-sectional area of the flow path, which is a gap between the contact portion 11 and the through hole 12a, can vary depending on the insertion depth of the contact portion 11 into the through hole 12a to control the flow rate.

The screw shaft 8 and the valve shaft 9 are connected in such a manner that the male screw portion 8c of the screw shaft 8 is screwed with the female screw portion 9c of the valve shaft 9, and the male screw portion 8c, the female screw portion 9c, and a bottom hole of the valve shaft 9 define a space S. The female screw portion 9c moves relative to the male screw portion 8c, and thereby the space S formed with the female screw portion 9c into which the male screw portion 8c is screwed is varied in its volume.

Further, the valve shaft 9 is guided in such a manner that the upper end portion of the valve shaft 9 in the figure is interposed in a radial direction between the body portion 8b of the screw shaft 8 extended through the screw hole 9a and an inner peripheral surface of the valve shaft insertion portion 40b, and therefore the forward and backward movement in the linear direction for bringing and separating the contact portion 11 into and from contact with the valve seat 12b is stabilized.

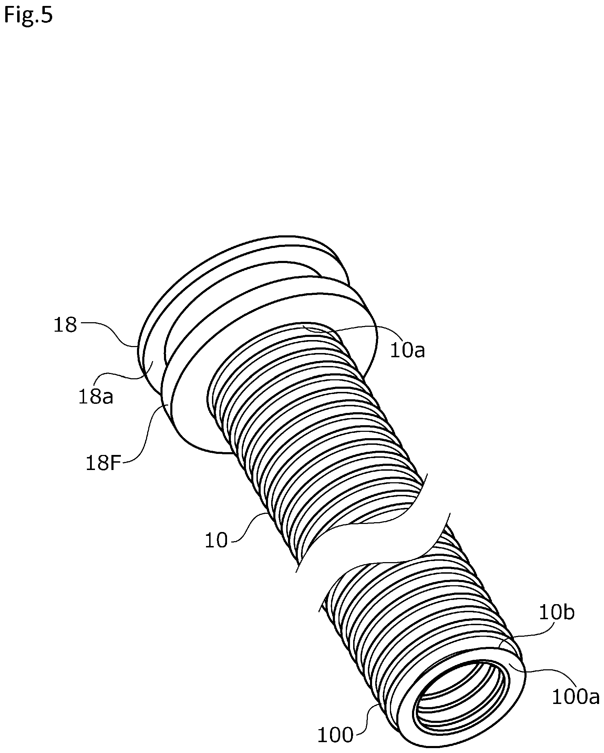

Next, the bellows 10 will be described based on FIGS. 4 and 5. The bellows 10 is a so-called formed bellows formed by pressing a metal plate into a perfect circle in a plan view and a bellows shape in which a plurality of peak portions 100 are connected to one another, and the thickness thereof is constant.

The bellows 10 is externally mounted on the valve shaft 9, the flange portion 11a of the contact portion 11 is welded and fixed to one end 10b of the bellows 10 in the longitudinal direction over the entire circumference of the one end 10b, and an annular stationary ring 18 is welded and fixed to another end 10a of the bellows 10 over the entire circumference of the other end 10a. In addition, the bellows 10 and the valve shaft 9, and the bellows 10 and the stationary ring 18 may be sealed by not only welding, but also interposing a sealing member therebetween or pressure bonding.

The stationary ring 18 has an annular extended portion 18F (see FIG. 5) protruding on the radially outer side of the bellows 10, and a protrusion 18b (see FIG. 4) that is formed on the inner peripheral surface, protrudes radially inward and extends in the axial direction, and the extended portion 18F is formed with a recessed groove 18a formed over the circumferential direction.

The stationary ring 18 is inserted into the annular recess 30, and stationary ring 18 and the base body 4 are connected in a sealed manner by an O-ring 51, which is an annular sealing means, arranged within the recessed groove 18a.

Further, when the stationary ring 18 is fitted into the annular recess 30, the protrusion 18b and the recess 43 of the base body 4 are engaged with each other, that is, so-called key-engaged with each other, thereby capable of restricting the relative rotation between the base body 4 and the stationary ring 18.

Thereby, a bellows inside space M2 as a space between the bellows 10 and the valve shaft 9 is formed in a sealed manner, and the bellows 10 functions as a partition wall between the valve chamber 15 and the bellows inside space M2.

The bellows inside space M2 is in communication with the case inside space M1 through the hole portion 40 (see FIG. 4) of the base body 4, and the bellows inside space M2, the hole portion 40 and the case inside space M1 constitute a machine room M (see FIG. 1) as a sealed continuous space together. Further, the machine room M is in a vacuum state. In addition, in FIGS. 1, 4 and 6, the gas within the machine room M, that is, the vacuum region is shown by dots for the purpose of convenience.

Here, the assembly process for making the space in the machine room M into a vacuum state will be described. Firstly, in the room, the case 3 is fixed by welding to the base body 4 in a sealed manner, the one end 10b of the bellows 10 is fixed by welding to the flange portion 11a of the contact portion 11 in a sealed manner, the other end 10a of the bellows 10 is fixed by welding to the stationary ring 18 in a sealed manner, and the O-ring 51 is arranged in the recessed groove 18a of the stationary ring 18. Then, in a vacuum chamber in a vacuum state, the stationary ring 18 is fitted into the annular recess 30 of the base body 4 while interposing the O-ring 51 therebetween. In this way, there is no need to weld, for example, in the vacuum chamber, so that the inside of the machine room M can be made into a vacuum state easily. In addition, the means for making the inside of the machine room M into a vacuum state is not limited. For example, the case 3 and the bellows 10 may be sealed and fixed to the base body 4, the air within the machine room M may be evacuated by means of a vacuum pump through an exhaust port provided in the case or the like, and then, the exhaust port may be sealed.

As to the vacuum state in the machine room M, the pressure inside the machine room M in the present embodiment is 1 Pa sufficiently smaller than 101325 Pa which is a standard atmospheric pressure, but it may be "the state of the space filled with the gas at lower pressure than ordinary atmospheric pressure" defined by Japanese Industrial Standards JIS Z 8126. In addition, the vacuum state in the machine room M may be appropriately varied depending on the environment where the expansion valve 1 is used.

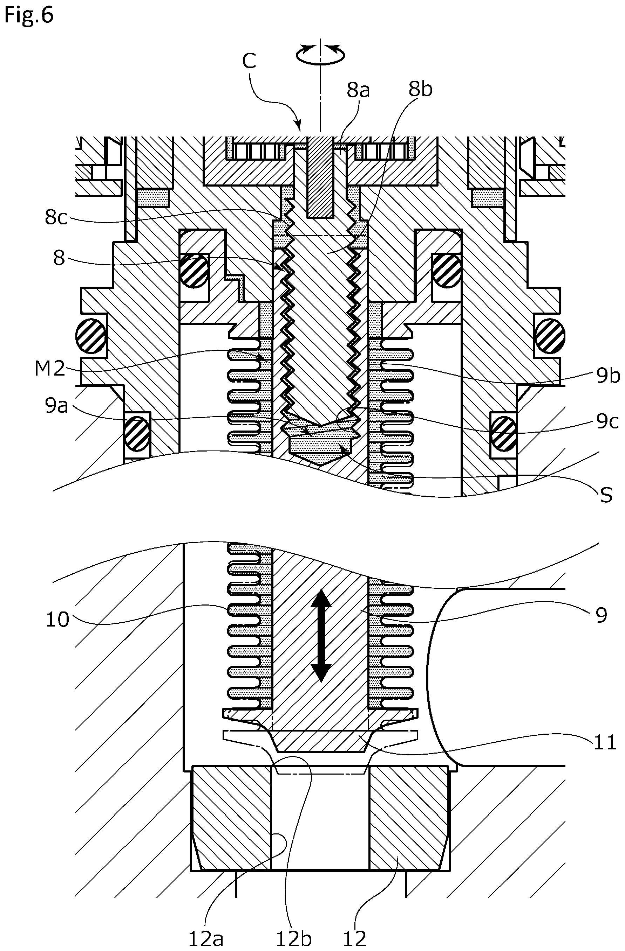

In this way, in the forward and backward moving mechanism C, the valve shaft 9 is directly screwed with the screw shaft 8, and the rotation of the valve shaft 9 relative to the main body portion 6 is restricted by the bellows 10 and the stationary ring 18. Thus, as shown in FIG. 6, the rotational movement of the screw shaft 8 causes the valve shaft 9 screwed with the screw shaft 8 to be linearly moved forward and backward in the axial direction without rotating, so that the responsiveness to adjust the valve opening can be increased.

Further, in the forward and backward moving mechanism C, the rotating speed of the rotor 13 is reduced by the speed reduction means 7 to be transmitted to the screw shaft 8, so that the accuracy of adjustment of the valve opening can be improved.

As described above, in the expansion valve 1 in the present embodiment, since the space between the bellows 10 and the valve shaft 9 is in a vacuum state, thermal expansion of gas is hardly generated between the bellows 10 and the valve shaft 9 even if the refrigerant is at high temperature, the bellows 10 is hardly affected by the refrigerant, and therefore the valve opening can be stably adjusted to the intended degree.

Further, since the inside of the machine room M is in a vacuum state and also the case inside space M1 in which the speed reduction means 7 is arranged is in a vacuum state, heat outside the case 3 is hardly transferred to the speed reduction means 7 via the air within the case inside space M1, the speed reduction means 7 is hardly affected by the heat outside the case 3 and therefore is usable over a wide temperature range.

Further, since the pressure of the refrigerant flowing into the valve chamber 15 is relatively higher than the pressure inside the machine room M in a vacuum state, the pressure of the refrigerant acting on the extended portion 18F of the stationary ring 18 can restrict the stationary ring 18 from moving toward the pulling out direction.

Further, not only the pressure of the refrigerant flowing into the valve chamber 15, but also, for example, in the middle of assembly of the expansion valve 1, even before the base body 4 is mounted to the housing 5, the outside atmospheric pressure is relatively higher than the pressure inside the machine room M in a vacuum state, so that pull pressure is generated toward the bellows inside space M2 from the outside of the bellows 10. The stationary ring 18 is attracted to the base body 4 by the pull pressure, thereby capable of restricting the stationary ring 18 from moving toward the pulling out direction.

Additionally, with reference to FIGS. 4 and 6, by the pull pressure generated toward the bellows inside space M2 from the outside of the bellows 10, the O-ring 51 arranged in the recessed groove 18a of the stationary ring 18 is also attracted to the base body 4. Therefore, adhesion of the O-ring 51 to the base body 4 and the stationary ring 18 is enhanced, and also the O-ring 51 is prevented from pulling out of the stationary ring 18 by an end face extending in the radial direction on the side of the case 3 of the recessed groove 18a, so that the vacuum state in the machine room M can be held.

Further, by a simple configuration in which the male screw portion 8c of the screw shaft 8 is directly screwed with the female screw portion 9c of the valve shaft 9, and the rotation of the valve shaft 9 relative to the main body portion 6 is restricted by the bellows 10 and the stationary ring 18, the valve shaft 9 can be moved forward and backward in the axial direction depending on the rotation of the rotor 13. Also, since the inside of the machine room M is in a vacuum state, even if the volume of the space S between the male screw portion 8c and the female screw portion 9c is changed because of relative forward and backward movement of the screw shaft 8 and the valve shaft 9, gas migration or pressure change is hardly generated, and therefore the accuracy of adjustment of the valve opening is high.

Further, the opposite ends 10a and 10b of the bellows 10 in the longitudinal direction are fixed to the base body 4 and the valve shaft 9, respectively, so that a gap between the machine room M and the valve chamber 15 is sealed. Therefore, malfunction by intrusion of dust, moisture or the like from the outside of the machine or the inside of the machine can be prevented. Additionally, in the machine room M, although a lubricant is used for the meshing positions between the gears and the movable members such as the shaft 16, the bellows 10 can prevent the lubricant from leaking to the side of the valve chamber 15 into which the refrigerant flows, and there is no adverse effect on cooling effect.

Further, since the bellows 10 is made of metal, the bellows 10 has high rigidity to torsional stress, and can strongly restrict the rotation of the valve shaft 9 relative to the main body portion 6.

Further, since the bellows 10 is formed by pressing a metal plate into a bellows shape in which a plurality of peak portions 100 are connected to one another in the axial direction, and the thickness thereof is constant, the rigidity to torsional stress can be increased evenly in the longitudinal direction of the bellows 10 to prevent local deformation and increase the responsiveness.

Furthermore, since the machine room M is in a vacuum state, and the refrigerant flows into the valve chamber 15, although the pressure inside the valve chamber 15 is relatively higher than the pressure inside the machine room M, the rigidity of the bellows 10 is increased evenly in the longitudinal direction thereof, and therefore pressure difference between the machine room M and the valve chamber 15 is tolerable.

Additionally, since the bellows 10 is formed into a perfect circle in a plan view, pressure, which acts in the radial direction with respect to the bellows 10, of the refrigerant flowed into the valve chamber 15 is easily dispersed, so that the bellows 10 has a configuration tolerable for the pressure difference between the machine room M and the valve chamber 15.

Further, as shown in FIGS. 4 and 5, the other end 10a and the one end 10b of the bellows 10 have the flat surfaces 100a constituting the peak portions 100 brought into contact with the stationary ring 18 and the flange portion 11a, and are welded and fixed over the entire circumference of the flat surfaces 100a. Thus, the contact area can be increased, the large welded portion can be secured at the peak portions 100 having a large outer diameter to increase the strength to fix the bellows 10 to the stationary ring 18 and the flange portion 11a, and the bellows 10 can contribute to restrict the rotation of the valve shaft 9.

Further, a structure in which an outer peripheral surface of the valve shaft 9 is inserted through the hole portion 40 formed in the receiving portion 4c of the base body 4, and is guided by an inner peripheral surface of the valve shaft insertion portion 40b in the hole portion 40, so that the valve shaft 9 is moved forward and backward to guide the contact portion 11, is not arranged around the contact portion 11 within the valve chamber 15. Thus, the space around the contact portion 11 can be effectively utilized, and the degree of freedom in arranging the secondary port P2 can be increased. Additionally, since the structure for guiding the contact portion 11 is not provided within the valve chamber 15, the capacity of the valve chamber 15 can be secured, so that the radial dimension of the valve chamber 15 can be designed to be small.

Further, the cylindrical portion 4b on the side of the housing 5 of the base body 4 extends through the hollow portion 5a of the housing 5, and the valve chamber 15 is defined by the hollow portion 5a and the cylindrical portion 4b to communicate with the primary port P1 and the secondary port P2. This allows a portion of the expansion valve 1 protruding outward from the housing 5 to be reduced in dimension while securing the volume of the valve chamber 15.

### {Second embodiment}

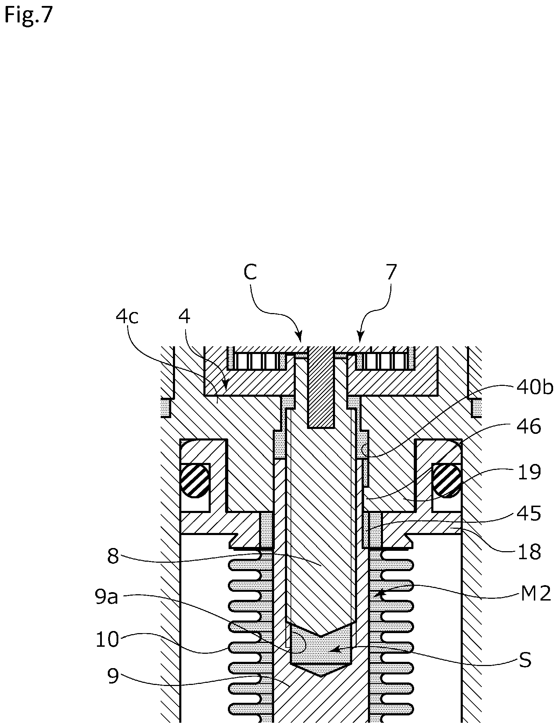

Next, an expansion valve according to a second embodiment of the present invention will be described with reference to FIG. 7. The description of the same configuration as that of the embodiment described above and the overlapping configuration will be omitted.

As shown in FIG. 7, a recess 45 is formed on the outer peripheral surface of the valve shaft 9 to be opened on the side of the speed reduction means 7 and radially outward, and a protrusion 46 protruding radially inward is formed in the valve shaft insertion portion 40b of the ridge 19 of the base body 4. The recess 45 of the valve shaft 9 and the protrusion 46 of the base body 4 are engaged with each other to restrict the relative rotation between the base body 4 and the valve shaft 9.

When the rotation between the base body 4 and the valve shaft 9 is restricted in this way, the recess 43 (see FIG. 4) formed in the base body 4 and the protrusion 18b (see FIG. 4) formed on the stationary ring 18 may be omitted. The configuration for restricting the rotation between the valve shaft 9 and the ridge 19 of the base body 4 is not limited to this. For example, a hole may be formed to extend through the ridge 19 in the radial direction, and a pin inserted into the hole and a recess formed on the outer peripheral surface of the valve shaft 9 may be used to restrict the rotation.

Although the embodiments according to the present invention have been described above with reference to the drawings, the specific configuration is not limited to these embodiments, and any changes or additions within the scope of the gist of the present invention are included in the present invention.

For example, in the embodiment described above, the bellows inside space M2 has been described as being in communication with the case inside space M1, but the present invention is not limited to this. The inside of the bellows inside space M2 may be in a vacuum state without being in communication with the case inside space M1, and even in such a mode, the bellows is hardly affected by the refrigerant, and therefore the valve opening can be stably adjusted to the intended degree.

Further, the forward and backward moving mechanism C has been described as the mode having the speed reduction means 7, but the present invention is not limited to this. The mode having no speed reduction means 7 may be possible, the mode having the speed reduction means 7 outside the machine room M may be possible, and any configuration in which the rotational movement of the rotor can be converted into the linear movement may be possible.

Further, the valve shaft 9 and the main body portion 6 have been described as having a configuration in which the recess 43 formed in the base body 4 is engaged with the protrusion 18b formed on the stationary ring 18 to restrict the rotation, but the present invention is not limited to this. For example, the stationary ring 18 may be fixed to the annular recess 30 formed in the main body portion 6 by press fitting, swaging, or welding, so that the bellows 10 may restrict the rotation between the valve shaft 9 and the main body portion 6.

Further, in order to secure the stroke of the valve shaft 9 and also to restrict the rotation of the valve shaft 9, the bellows 10 preferably has a proportion having an axial dimension of 10 times or less the inner diameter of the bellows 10.

Further, the stationary ring 18 may be welded to the annular recess 30 over the entire circumference, so that the recessed groove 18a formed in the stationary ring 18 and the O-ring 51 may be omitted. Similarly, the bellows 10 may be directly connected to the main body portion 6 in a sealed manner.

Further, the bellows 10 is not limited to a formed bellows formed by pressing a metal plate into a bellows shape in which peaks and valleys are alternately connected to one another, and may be a welded bellows configured by laminating and welding a corrugated pressed disk-shaped metal plate.

Further, the bellows 10 is not limited to be made of metal, and may have any configuration as long as it has high rigidity. For example, the bellows 10 may be configured such that a spiral structural material or the like is built in or externally mounted on a bellows-shaped tubular body made of synthetic resin. In this case, the spiral structural material is preferably welded and fixed to the base body 4 and the contact portion 11.

Further, the bellows 10 may have a biasing means such as a compression spring for biasing to the extension direction. In such a configuration, the force required for extension of the bellows 10 can be reduced by the biasing means. That is, it is preferable that the biasing force in the extension direction acts on the bellows 10 with or without the biasing means.

Further, the bellows 10 is not limited to be configured to have a perfect circle in a plan view. For example, the bellows 10 can be formed to have a width-across-flats shape in a plan view to further increase the rigidity to torsional stress.

Further, the configuration of the speed reduction means 7 is not limited to the configuration of the embodiments described above as long as it is configured to reduce the rotation of the rotating shaft portion 13c of the rotor 13.

Further, the configuration of the case 3, the base body 4, the rotor 13, and the like is not limited to the configuration of the embodiments described above as long as the rotational movement of the rotor 13 is transmitted to the screw shaft 8 via the speed reduction means 7.

Further, the present invention is not limited to a structure in which the screw shaft 8 has the male screw portion 8c and the valve shaft 9 has the female screw portion 9c, and the screw shaft 8 may have a female screw portion and the valve shaft 9 may have a male screw portion.

### {REFERENCE SIGNS LIST}

- 1: Expansion valve
- 2: Excitation mechanism (excitation portion)
- 3: Case
- 6: Main body portion
- 7: Speed reduction means
- 8: Screw shaft
- 8c: Male screw portion
- 9: Valve shaft (valve body)
- 9c: Female screw portion
- 10: Bellows
- 10a: Another end
- 10b: One end
- 12b: Valve seat
- 13: Rotor
- 15: Valve chamber
- 18: Stationary ring
- 30: Annular recess
- C: Forward and backward moving mechanism
- M1: Case inside space (space inside the case)
- M2: Bellows inside space (space between the bellows and the valve body)
- P1: Primary port
- P2: Secondary port
- S: Space (space into which the male screw portion is screwed)

## Claims

1. An expansion valve comprising:
a main body portion having a valve chamber and a valve seat;
a valve body configured for moving forward and backward relative to the valve seat;
a case fixed to the main body portion;
an excitation portion;
a rotor that is driven to rotate by the excitation portion; and
a forward and backward moving mechanism that converts a rotational movement of the rotor into a linear movement to move the valve body forward and backward, wherein
the valve chamber has a bellows housed therein, the bellows being externally mounted on the valve body and configured for expanding and contracting in association with forward and backward movement of the valve body is arranged, and
a space between the bellows and the valve body is held in a vacuum state.

2. The expansion valve according to claim 1, wherein
the case is fixed in a sealed manner to the main body portion,
the forward and backward moving mechanism has a speed reduction device that is arranged within the case and is configured for reducing a moving speed of the valve body with respect to a rotational speed of the rotor, and
a space within the case is in communication with the space between the bellows and the valve body.

3. The expansion valve according to claim 1 or 2, wherein one end of the bellows is fixed in a sealed manner to the valve body, a stationary ring is fixed in a sealed manner to another end of the bellows, and the stationary ring is fitted with a sealing member in a sealed manner into an annular recess formed in the main body portion.

4. The expansion valve according to claim 3, wherein the stationary ring has an extended portion that is extended on a radially outer side of the bellows.

5. The expansion valve according to any one of claims 1 to 4, wherein the forward and backward moving mechanism includes a screw shaft having a male screw portion, and a valve shaft having a female screw portion configured for screwing with the male screw portion of the screw shaft and the valve body, and is provided with a space formed with the female screw portion into which the male screw portion is screwed.
